# EUROPÄISCHE PATENTSCHRIFT

(11) **EP 2 162 354 B1**
(45) Veröffentlichungstag und Bekanntmachung des Hinweises auf die Patenterteilung: **04.07.2012**
(21) Anmeldenummer: 08758163.3
(22) Anmeldetag: 05.06.2008
(51) Int. Cl.: B64C 27/615

(54) **ROTORBLATT FÜR EIN DREHFLÜGELFLUGZEUG**
ROTOR BLADE FOR A ROTARY WING AIRCRAFT
PALE DE ROTOR POUR GIRAVION

(30) Priorität: 28.06.2007 DE 102007030095
(43) Veröffentlichungstag der Anmeldung: 17.03.2010
(73) Patentinhaber: Eurocopter Deutschland GmbH, 86609 Donauwörth (DE)
(72) Erfinder: ALTMIKUS, Andree, 85635 Höhenkirchen-Siegertsbrunn (DE); BAUER, Markus, 81549 München (DE); GROHMANN, Boris, 82024 Taufkirchen (DE); MANGELSDORF, Stephan, 81375 München (DE); MAUCHER, Christoph, 81371 München (DE); PFALLER, Rupert, 85521 Riemerling (DE); AHCI, Elif, 81675 München (DE)
(74) Vertreter: Pouillot, Laurent Pierre Paul
(86) Internationale Anmeldenummer: PCT/DE2008/000934
(87) Internationale Veröffentlichungsnummer: WO 2009/000227

(56) Entgegenhaltungen:
- EP-A- 0 275 056
- EP-A- 0 814 019
- WO-A-2004/069651
- US-A- 5 150 864
- US-B1- 6 497 385

## Beschreibung

### TECHNISCHES GEBIET

Die vorliegende Erfindung betrifft ein Rotorblatt mit einer beweglichen Rotorblatt-Klappe, insbesondere für ein Drehflügelflugzeug, wie zum Beispiel einen Hubschrauber, sowie ein Drehflügelflugzeug mit einem solchen Rotorblatt.

### STAND DER TECHNIK

An Rotorblättern eines Drehflügelflugzeuges entstehen im Betrieb Luftwirbel. Diese erzeugen Lärm und Vibrationen, welche beispielsweise in der Kabine des Drehflügelflugzeuges spürbar sind und somit den Komfort der Passagiere beeinträchtigen. Außerdem sind solche Vibrationen im Hinblick auf die Lebensdauer und die Wartung nachteilig, da sie zu einer Materialermüdung der Bauteile und fortgesetzter Relativbewegung der Bauteile mit damit einhergehender Abnutzung führen können.

Komplexe aero-mechanische und aero-elastische Phänomene, z. B. der Zusammenstoß eines Rotorblattes mit Blattwirbeln eines jeweils vorauseilenden Rotorblattes und die daraus resultierenden, auf das Rotorblatt wirkenden Kräfte sind die Ursache dieser Geräusche und Vibrationen. Um unterschiedlichen Flugzuständen und variierenden Anstellwinkeln so weit wie möglich Rechnung zu tragen, werden Rotorblätter verwendet, bei welchen sich die Gestalt des Rotorblattes im Hinterkantengebiet verändern lässt. Durch die gezielte Anpassung der Rotorblattgestalt im Hinterkantengebiet können Geräusche und Vibrationen reduziert und gleichzeitig die Flugleistung und der Flugbereich verbessert werden.

Im Stand der Technik sind dazu Rotorblatt-Klappen an der Rotorblatthinterkante bekannt, welche beispielsweise mit Hilfe eines Gelenklagers beweglich an einem Rotorblatt-Profilkörper befestigt sind. Aus der DE 101 16 479 A1 ist ein solches Rotorblatt bekannt, wobei die Rotorblatt-Klappe über einen Piezoaktuator ansteuerbar ist, der in einer Profiltiefenrichtung von der Klappe beabstandet in einem vorderen Profilbereich des Rotorblattprofilkörpers angeordnet ist. Der Piezoaktuator generiert Stellkräfte und überträgt diese über streifen- oder stangenförmige Zugelemente auf die Rotorblattklappe.

Diese Art von Rotorblättern ist wegen der Gelenke einem verstärken Verschleiß ausgesetzt. Kurze Betriebsdauer bis zum Austausch oder reduzierte Wirksamkeit sind die Folge. Daher schlägt die DE 103 34 267 A1 ein Rotorblatt mit elastisch beweglicher Rotorblatt-Klappe vor, bei welcher in den starren Deckhäuten des Flügelprofils bzw. unmittelbar unter den in sich starren Deckhäuten bzw. auf den starren Deckhäuten piezoelektrische Aktuatoren befestigt sind. So kann wahlweise eine der beiden piezoelektrischen Aktuatoren auf der oberseitigen Deckhaut oder der unterseitigen Deckhaut des Flügelprofils betätigt werden. Das führt zu einer Verschiebung der jeweiligen Deckhaut relativ zu der anderen Deckhaut, wodurch die obere Deckhaut relativ zur unteren Deckhaut verkürzt bzw. verlängert wird. Aufgrund der relativen Verkürzung einer Deckhaut zur anderen wird die an den Deckhäuten angebrachte starre Rotorblatt-Klappe ausgelenkt und nach oben oder unten bewegt.

In der JP 8-216-997 ist ein Rotorblatt für einen Hubschrauber offenbart, bei welchem sich die Deckhaut in der Umgebung der Hinterkante des Rotorblattes zumindest in Richtung der Profilsehne mit Hilfe eines piezoelektrischen Elements ausdehnen und zusammenziehen kann.

Eine ähnliche Anordnung ist auch in der DE 103 04 530 A1 offenbart, wobei die piezoelektrischen Aktuatoren entweder in das Profil integriert sind, für das keine Klappe vorgesehen ist, oder alternativ ausschließlich in der Klappe vorgesehen sind. Bei den in der Klappe vorgesehenen Piezoaktuatoren wird die Profilklappe mittels der piezoelektrischen Aktuatoren verformt.

In der US-A-6497385 wird die Unterteilung einer Rotorblatt-Klappe in mehreren Sektionen beschrieben, unter Verweis auf eine Implementation, gemäß EP-A-0814019, mit SMA-Aktuatoren, die eine biegsame Klappe steuern.

Systembedingt müssen bei diesen Lösungen mit einer elastisch beweglichen Rotorblatt-Klappe der bzw. die Aktuatoren nahe der Hinterkante des Profilquerschnitts angeordnet werden. Da in diesem Bereich des Blattes bedingt durch Schwenkmomente und Fliehkraft hohe Zugdehnungen auftreten und die Aktuatoren in der Regel zugempfindlich sind, kann die auftretende Fliehkraftdehnung bereits beim Hochlaufen des Rotors zu einem Versagen der Aktuatoren führen.

### DARSTELLUNG DER ERFINDUNG

Davon ausgehend ist es Aufgabe der Erfindung ein Rotorblatt mit einer Rotorblatt-Klappe vorzusehen, das mechanisch und kinematisch einfach aufgebaut ist, über günstige aerodynamische Eigenschaften verfügt, eine kontinuierlich übergehende Verformung in Profilsehnen- und Spannweitenrichtung ermöglicht und eine verringerte Fliehkraftdehnung auf die Aktuatoren aufweist.

Diese Aufgabe wird durch die Merkmale des Patentanspruches 1 gelöst.

Die Unteransprüche bilden vorteilhafte Weiterentwicklungen der Erfindung.

Das erfindungsgemäße Rotorblatt, insbesondere für ein Drehflügelflugzeug, umfasst ein aerodynamisch wirksames Rotorblattprofil mit einem Profil-Nasenbereich, einem Profil-Grundkörper mit einem Profilkern und einer den Profilkern umhüllenden oberen und unteren Deckhaut, sowie einem Profil-Hinterkantenbereich mit einer Hinterkante und Aktuatoren. Ein reversibel verbiegbares Trägerelement ist mit einem ersten Ende an einem zur Hinterkante hinweisenden Endbereich des profil-Grundkörpers eingebettet und befestigt und ragt mit einem zweiten Ende aus dem Profilgrundkörper und dessen Endbereich zur Hinterkante hinaus und bildet eine bewegliche Rotorblatt-Klappe. Das herausragende zweite Ende des reversibel verbiegbaren Trägerelements steht mit mehreren Aktuatoren in Wirkverbindung, sodass über eine Längenänderung der Aktuatoren ein bogenförmiger Klappenausschlag initiierbar ist. Dabei ist das die Rotorblatt-Klappe bildende zweite Ende des reversibel verbiegbaren Trägerelements in Spannweitenrichtung (S) betrachtet durch Einschnitte in mehrere Segmente eingeteilt, denen jeweils mindestens ein auf einer Oberfläche des Trägerelements aufgebrachter Aktuator zugewiesen ist.

Indem dass reversibel verbiegbare Trägerelement mit seinem ersten Ende an dem zur Hinterkante hinweisenden Endbereich des Profil-Grundkörpers befestigt ist, wird erreicht, dass keine zusätzlichen mechanischen Elemente zur Befestigung einer Klappe, wie z. B. Scharniere, nötig sind. Durch diese in der Profilstruktur liegende Befestigung ist zudem eine stabile und mechanisch relativ einfach zu realisierende Befestigung ermöglicht. Da mittels der Aktuatoren die gesamte Rotorblatt-Klappe, gegebenenfalls einschließlich einer zwischen einer Deckhaut und dem Trägerelement liegenden Füllschicht verformt wird, entstehen keine abrupten Übergänge sondern vielmehr in allen Auslenkungszuständen der Klappe gleichmäßige, stetige Konturen, die sowohl in Profilsehnenrichtung als auch in Spannweitenrichtung oder auch nur in eine der beiden Richtungen variieren kann, wenn unterschiedliche Bereiche aktiviert werden. Durch die Aufteilung des reversibel verbiegbaren Trägerelements bzw. der Rotorblatt-Klappe in Segmente wird in vorteilhafter Weise erreicht, dass nur noch ein Teil der Fliehkraft- und Schwenkdehnung am Hauptrotorblatt in die aktive Hinterkante und damit in die Aktuatoren übertragen wird. Daraus folgt, die Aktuatoren "sehen" nur noch einen Teil der Hinterkantendehnung. Über die Breite der einzelnen Segmente, die Tiefe des Einschnittes und die Steifigkeiten der aneinander angrenzenden Teile kann die Dehnung der Aktuatoren eingestellt werden.

Gemäß einer Ausführungsform der Erfindung sind die Einschnitte senkrecht zur Spannweitenrichtung (S) angeordnet.

Gemäß einer besonders vorteilhaften Ausführungsform der Erfindung sind die Einschnitte schräg zur Spannweitenrichtung (S) ausgebildet. Dies hat den Effekt, dass unter Ausnutzung des unterbrochenen, spannweitigen Kraftfluss im Bereich der Einschnitte die Lasten bzw. Spannungen durch Fliehkraft, Schlagen, Schwenken usw. sich derart vorteilhaft überlagern, dass im Piezoelement keine unerwünschten Spannungszustände, insbesondere Zug, wirken bzw. unerwünschte Spannungszustände reduziert werden. Die Aktuatorelemente können dadurch zusätzlich auf Druck vorgespannt werden. Weiterhin reduzieren sich die ungünstigen, spannweitigen Biegelasten im Aktuator und die Knickgefahr durch Fliehkraft.

Vorzugsweise sind die Aktuatoren direkt auf das reversibel verbiegbare Trägerelement, beispielsweise mittels einer stoffschlüssigen oder kraftschlüssigen Verbindung, aufgebracht.

Nach einer bevorzugten Ausführungsform sind die Aktuatoren als Piezoaktuatoren, beispielsweise mit einem d33-Piezoelement, einem d31-Piezoelement oder aber einem anderen, durch Zufuhr von elektrischem Strom aktivierbaren und formverändernden Element, wie beispielsweise Piezopolymere oder Piezokeramiken in anderen Formen als Stapel, ausgebildet.

Dabei können das reversibel verbiegbare Trägerelement und/oder die Piezoaktuatoren eine variierende Dicke bzw. an die Belastung oder zu erzeugende Kraft angepasste Aktivierungs- und Formänderungseigenschaften aufweisen, was weitere Flexibilität im Hinblick auf die Aktivierungsmöglichkeiten und die Verformung der Rotorplatte gibt. Insbesondere kann der Aufbau des Trägerelements und des Piezoaktuators derart sein, dass beispielsweise eine maximale Auslenkung der Klappe oder die aerodynamische Effektivität der Klappe bzw. des Rotorblattprofils optimiert werden. Eine solche Optimierung kann auch dadurch verstärkt werden, dass das Trägerelement und der Piezoaktuator gezielt in Bezug auf die Materialeigenschaften ausgerichtet werden, wenn sie als anisotrope Materialien richtungsabhängig sind.

Als reversibel verbiegbares Trägerelement kommt insbesondere faserverstärkter Kunststoff, nach Bedarf mit anisotropen oder isotropen Eigenschaften, z.B. mit einer Matrix aus einem duromeren Harz (z.B. Epoxydharz) oder einem thermoplastischen Harz und Fasern z. B. aus Glas, Kohle, Aramid oder Polyamid in Betracht. Vorzugsweise ist in Auftriebsrichtung (A) betrachtet auf beiden Seiten des Segments ein Aktuator angeordnet.

Denkbar ist aber auch, dass in Auftriebsrichtung (A) betrachtet nur auf einer Seite der Segmente ein Aktuator angeordnet ist.

Vorzugsweise ist das Trägerelement z.B. als Federelement oder mit Vorspannung ausgestattet und bildet somit eine Rückstelleinrichtung für die Aktuatoren.

Bevorzugter Weise ist auf das Trägerelement ein flexibles Füllmaterial aufgebracht, dessen Außenseite in diesem Bereich des Rotorblattprofils dessen Außenkontur formt. Das flexible Füllmaterial kann das Trägerelement vollständig oder auch nur teilweise bedecken. Das flexible bzw. gummielastische Füllmaterial kann nach einer bevorzugten Ausführungsform eine flexible Schutzhaut bilden. Alternativ kann eine zusätzliche flexible, biegeelastische Schutzschicht als außenseitiger Abschluss das flexible Füllmaterial umgeben, so dass das flexible Füllmaterial zwischen dem Trägerelement und der Schutzhaut liegt. Die Schutzhaut kann in diesem Fall z. B. eine flexible Folie, nachträglich aufvulkanisiertes Material, ein Schutzanstrich oder dergleichen sein. Denkbar ist auch, dass die Schutzschicht als gewöhnliche Deckhaut, die i. d. R. aus Faserverbundwerkstoff hergestellt ist, ausgebildet ist, wobei dann in der Deckhaut im Bereich des verbiegbaren Klappenbereichs eine lokale Dünnstelle, die ein sogenanntes virtuelles Gelenk bildet, in der Deckhaut vorhanden sein muss, oder die Deckhaut im Profilhinterkantenbereich muss insgesamt weitaus dünner als gewöhnlich ausgebildet sein, so dass sie beim Aufbringen von Kräften durch den Aktuator leicht verformbar ist. Eine verformbare Stelle kann z. B. auch durch eine lokale, biege- und/oder zug/druckweiche Einlage in der Deckhaut oder durch ein e-bensolches integriertes Material gebildet sein.

Sowohl Füllmaterial als auch Schutzhaut können einseitig oder beidseitig auf dem Trägerelement vorgesehen sein. Die Verwendung von Füllmaterial bietet einen besonders gleichmäßigen Übergang zwischen dem Rotorblattprofil und der Rotorblatt-Klappe im Hinblick auf die Kontur, da das Füllmaterial beliebig konturierbar ist. Insbesondere kann das Füllmaterial bis auf den Profil-Grundkörper bzw. dessen Deckschicht und/oder darunter, also zwischen Kern und Deckschicht, reichen und im Querschnitt, z. B. gabelartig oder zangenartig den Profil-Grundkörper in dessen Endbereich umfassen. Der Profil-Grundkörper kann z. B. spitz in das Füllmaterial hinein über eine frei wählbare Länge zulaufen.

Alternativ dazu bildet das Trägerelement ohne weiteres Füllmaterial die Klappe, wobei in diesem Fall nur der Verankerungsbereich des Trägerelements am oder im Profilhinterkantenbereich liegt. Im Bereich der Rotorblatt-Klappe sind dann keine weiteren flexiblen Schichten vorgesehen, außer ggf. einer biegeelastischen Schutzhaut unmittelbar angrenzend an das Trägerelement.

Für das flexible Füllmaterial wird bevorzugt ein Schaummaterial, ein Elastomerwerkstoff (z. B. Silikon) als homogenes, flexibles Material verwendet, das der Formänderung des Trägerelements folgt und somit zu einer Klappenauslenkung und Klappenformänderung führt, die der Auslenkung und Formänderung des Trägerelements entspricht. Alternativ kann das Füllmaterial durch ein tragwerkartiges Material, d.h. ein inhomogenes Material oder eine Struktur, gebildet sein. Solche z. B. rippenartigen Versteifungselemente erstrecken sich vorzugsweise in Profildickenrichtung, betrachtet im Querschnitt des Rotorblattprofils.

Zum Ausbilden einer Schnittstelle zwischen Profil-Grundkörper und Rotorblattklappe ist vorzugsweise eine Befestigungseinrichtung für die Rotorblatt-Klappe derart vorgesehen, dass die Rotorblatt-Klappe, beispielsweise zum Austausch oder für Wartungsarbeiten oder zur Überprüfung, gelöst werden kann. Eine solche Schnittstelle enthält sowohl eine mechanische Schnittstelle, welche sicherstellt, dass die mechanischen Eigenschaften des ursprünglichen Rotorblattes gewahrt werden, wenn das Rotorblatt und die Rotorblatt-Klappe getrennt und anschließend wieder zusammengefügt werden, als auch eine elektrische Schnittstelle mit elektrischen Anschlüssen, welche aufgrund gegenseitig zusammenpassender Elemente an zwei Bauteilen gewährleistet, dass die z.B. elektrische Kontaktierung, die vorzugsweise über das Innere des Profilkerns erfolgt, problemlos wiederherstellbar ist. Da die Schnittstelle bei angebrachter Klappe nicht zur Umgebung freigelegt ist, ist sie, während des Betriebes gegenüber Umgebungseinflüssen, wie Verschmutzung, geschützt. Statt eine Schnittstelle mit einer Möglichkeit zum Lösen des Trägerelements vom Profil-Grundkörper vorzusehen, kann das Trägerelement auch unlösbar am Profil befestigt sein.

Weitere Vorteile, Merkmale und Anwendungsmöglichkeiten der vorliegenden Erfindung ergeben sich aus der nachfolgenden Beschreibung in Verbindung mit den in der Zeichnung dargestellten Ausführungsbeispielen.

Die Erfindung wird im Folgenden an Hand des in der Zeichnung dargestellten Ausführungsbeispiels näher beschrieben.

In der Beschreibung, in den Patentansprüchen, in der Zusammenfassung und in der Zeichnung werden die in der unten aufgeführten Liste der Bezugszeichen verwendeten Begriffe und zugeordneten Bezugszeichen verwendet. In der Zeichnung bedeuten:
- Fig. 1: eine Querschnittsansicht durch ein Rotorblatt gemäß einer ersten Ausführungsform der Erfindung;
- Fig. 2: eine Querschnittsansicht durch ein Rotorblatt gemäß einer anderen Ausführungsform der Erfindung;
- Fig. 3: eine Draufsicht auf ein erfindungsgemäßes Rotorblatt für ein Drehflügelflugzeug mit segmentierter, aktiver Hinterkante;
- Fig. 4: ein Diagramm zur Darstellung des Einflusses der Segmentbreite auf die Dehnung des Aktuators;
- Fig. 5: ein Diagramm zur Darstellung des Einflusses der Einschnitttiefe pro Segment auf die Dehnung des Aktuators;
- Fig. 6: eine weitere Ausführungsform der Erfindung mit schräg angestellten Segmenten;
- Fig. 7: in vergrößerter Ansicht einen Ausschnitt eines mit Aktuatoren in Wirkverbindung stehenden Trägerelements des erfindungsgemäßen Rotorblatts in Querschnittsansicht;
- Fig. 8: eine alternative Ausführungsform zu Fig. 7;
- Fig. 9: eine weitere alternative Ausführungsform zu Fig. 7;
- Fig. 10: in vergrößerter Ansicht einen Hinterkantenbereich eines Rotorblattprofils des erfindungsgemäßen Rotorblattes, der über eine elektrische und mechanische Schnittstelle verfügt;
- Fig. 11: eine Alternative zur elektrischen und mechanischen Schnittstelle aus Fig. 10;
- Fig. 12: eine weitere Alternative zur elektrischen und mechanischen Schnittstelle aus Fig. 10;
- Fig. 13: noch eine weitere Alternative zur elektrischen und mechanischen Schnittstelle aus Fig. 10;
- Fig. 14: eine weitere Alternative zur elektrischen und mechanischen Schnittstelle aus Fig. 10;
- Fig. 15: eine weitere Alternative zur elektrischen und mechanischen Schnittstelle aus Fig. 10;
- Fig. 16: noch eine weitere Alternative zur elektrischen und mechanischen Schnittstelle aus Fig. 10;
- Fig. 17: noch eine weitere Alternative zur elektrischen und mechanischen Schnittstelle aus Fig. 10;
- Fig. 18: noch eine weitere Alternative zur elektrischen und mechanischen Schnittstelle aus Fig. 10;
- Fig. 19: eine Querschnittsansicht durch einen Hinterkantenbereich eines erfindungsgemäßen Rotorblattes, wobei homogenes Füllmaterial verwendet wird;
- Fig. 20: eine Ansicht entsprechend Fig. 19, wobei inhomogenes Füllmaterial verwendet wird; und
- Fig. 21: ein Beispiel für den Übergang zwischen einem Profil-Grundkörper und einem Hinterkatenbereich.

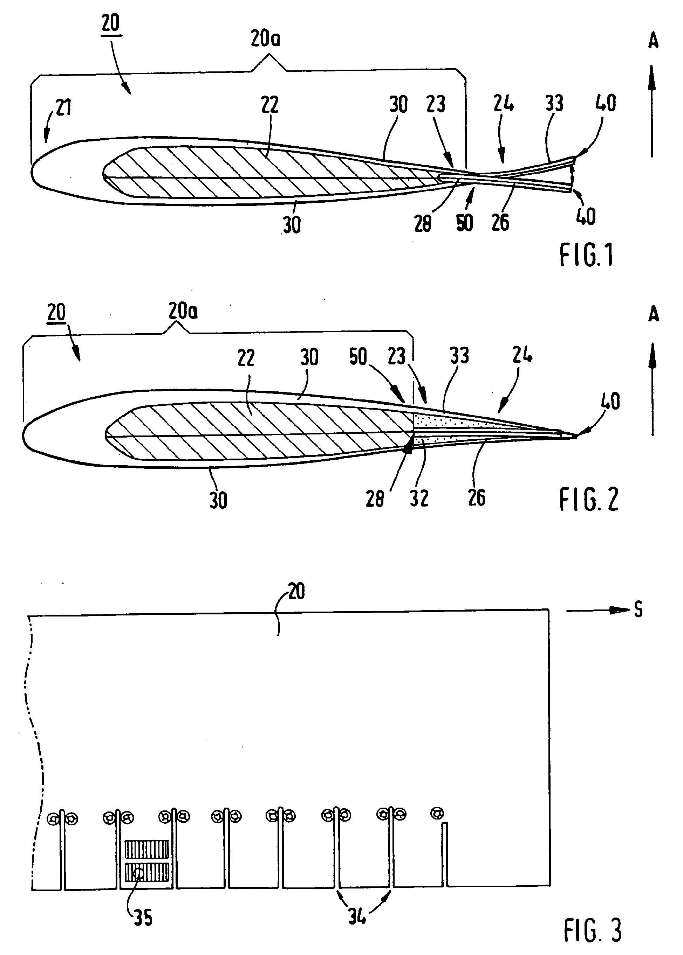

Fig. 1 und Fig. 2 zeigen zwei Ausführungsformen eines erfindungsgemäßen Rotorblatts 20. Das Rotorblatt 20 besitzt einen Profil-Grundkörper 20a mit einem Profilkern 22 und weist ferner einen Profil-Nasenbereich 21 und einen Hinterkantenbereich 23 mit einer Hinterkante 40 auf. Der Profilkern 22 erstreckt sich von dem Profil-Nasenbereich 21 zum Hinterkantenbereich 23. Das Rotorblatt 20 besitzt des Weiteren eine Rotorblatt-Klappe 24, die sich an den Profil-Hinterkantenbereich 23 anschließt. Die in Fig. 1 und 2 gezeigten Querschnitte durch das Rotorblatt 20 sind Querschnitte senkrecht zur Spannweitenrichtung und in Profiltiefenrichtung des Rotorblattes 20.

Bei der in Fig. 1 gezeigten Ausführungsform ist die Rotorblatt-Klappe 24 durch ein, mit Aktuatoren in Wirkverbindung stehenden reversibel verbiegbares Trägerelement 26 gebildet, das an seinem zum Profil-Nasenbereich 21 weisenden Ende eine Befestigungseinrichtung 28 aufweist, mit dem das Trägerelement 26 an einem Befestigungsbereich 50 in den Profilkern 22 bzw. den Profil-Grundkörper 20a eingebettet und befestigt ist. Aus Gründen der Übersichtlichkeit sind in Fig. 1 die mit dem reversibel verbiegbaren Trägerelement 26 in Wirkverbindung stehenden Aktuatoren nicht dargestellt. In Fig. 1 ist das Trägerelement 26, das die Rotorblatt-Klappe 24 bildet, in zwei unterschiedlichen Auslenkungspositionen gezeigt. Das Trägerelement 26 ist beidseitig mit einer flexiblen bzw. elastischen Schutzhaut 33 bedeckt. Die Schutzhaut 33 kann auch nur einseitig vorgesehen sein. Der Profilkern 22 des Rotorblatts 20 ist durch eine weitgehend starre und zur Stabilität beitragende obere und untere Deckhaut 30 bedeckt. Das Trägerelement 26 bildet somit im Hinterkantenbereich 23 des Rotorblattprofils eine Verlängerung des Profilkerns 22 bzw. des Profil-Grundkörpers 20a. Profil-Grundkörper 20a und die Rotorblatt-Klappe 24 mit ihrem Trägerelement 26 bilden zusammen das Rotorblattprofil.

Anders als bei dem in Fig. 1 gezeigten Rotorblaftprofil 20 ist bei dem in Fig. 2 gezeigten Rotorblattprofil 20 nicht nur die Befestigungseinrichtung 28 des Trägerelements 26 im Profilkern 22 bzw. dem Befestigungsbereich 50 des Profil-Grundkörpers 20a eingebettet, sondern es ist zwischen den Schutzhäuten 33 im Bereich der Rotorblatt-Klappe 24 und dem Trägerelement 26 ein biegeelastisches erstes Füllmaterial 32 eingebracht. Entsprechend zu Fig. 1 sind auch in Fig. 2 die mit dem reversibel verbiegbaren Trägerelement 26 in Wirkverbindung stehenden Aktuatoren nicht dargestellt. Durch die in Fig. 2 dargestellten Maßnahmen ist nicht nur die Befestigungseinrichtung 28 vor Umwelteinflüssen geschützt im Profil-Grundkörper 20a angebracht, sondern das gesamte Trägerelement 26 liegt geschützt. Außerdem kann damit der Übergang zwischen Profil-Grundkörper 20a bzw. dessen Endbereich und der Rotorblatt-Klappe 24 gleichmäßig und ohne störende Kanten oder Stufen verformt werden. Aufgrund der Elastizität des ersten Füllmaterials 32 und der Schutzhaut 33, zumindest im Hinterkantenbereich 23 des Rotorblattes 20, kann eine Auslenkung des Hinterkantenbereichs 23 des Rotorblatts 20 in klappenartiger Weise gewährleistet werden, wobei jedoch zusätzlich die Rotorblatt-Klappe 24 in sich bogenförmig reversibel verformt wird.

Insbesondere bei verhältnismäßig dünnen Rotorblattprofilen ist diese Ausgestaltungsweise bevorzugt, da aufgrund einer verhältnismäßig dünnen Schicht aus elastischem ersten Füllmaterial 32 die Übertragung von der Bewegungs- und Formänderung des Trägerelements 26 zur Veränderung der Profilaußenkontur nicht eingeschränkt ist. Somit bleibt eine Gestaltänderung des Hinterkantenbereichs 23 des Rotorblatts 20 in gewünschter, klappenartiger Weise, d.h. zumindest ähnlich wie bei der Verwendung von starren Rotorblatt-Klappen, sichergestellt. Und Unstetigkeitsstellen (Knicke etc.) bei der Klappenauslenkung zwischen Profil-Grundkörper 20a und Rotorblatt-Klappe 24 werden vermieden.

Wie insbesondere aus Fig. 3 ersichtlich ist, weist dabei das die Rotorblatt-Klappe 24 bildende Trägerelement 26 in Spannweitenrichtung (S) betrachtet mehrere Einschnitte 34 auf. Zudem ist in Fig. 3 exemplarisch ein mit dem Trägerelement 26 in Wirkverbindung stehender Aktuator 35 dargestellt. Die Einschnitte 34 verlaufen vorliegend senkrecht zur Spannweitenrichtung (S). Durch die Einschnitte 34 ist die Rotorblatt-Klappe 24 als ein segmentierter Bereich ausgebildet. Aufgrund der segmentierten Ausbildung wird nur noch ein Teil der Fliehkraft- und Schwenkdehnung am Hauptrotorblatt in die aktive Hinterkante und damit in die mit dem Trägerelement 26 in Wirkverbindung stehenden Aktuatoren 35 übertragen. Daraus folgt, dass die Aktuatoren 35 nur noch einen Teil der Hinterkantendehnung "sehen" und entsprechend einer geringeren Belastung ausgesetzt sind.

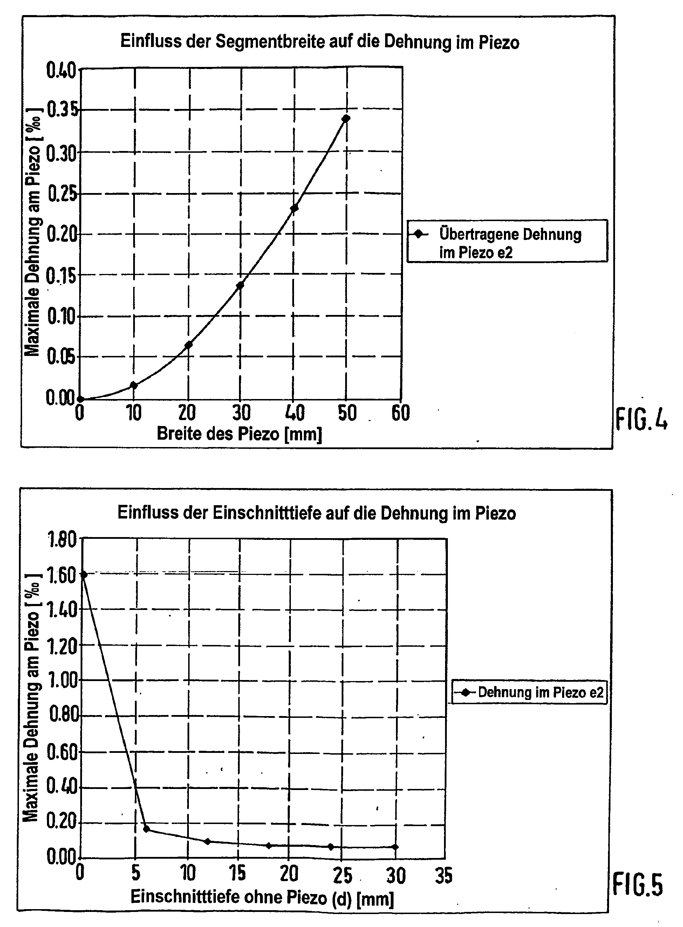

Über die Breite der einzelnen Segmente, die Tiefe des Einschnittes 34, kann die auf die Aktuatoren 35 wirkende Dehnung eingestellt werden. Der Einfluss der Segmentbreite bzw. der Einfluss der Einschnitttiefe ist in Fig. 4 und 5 dargestellt.

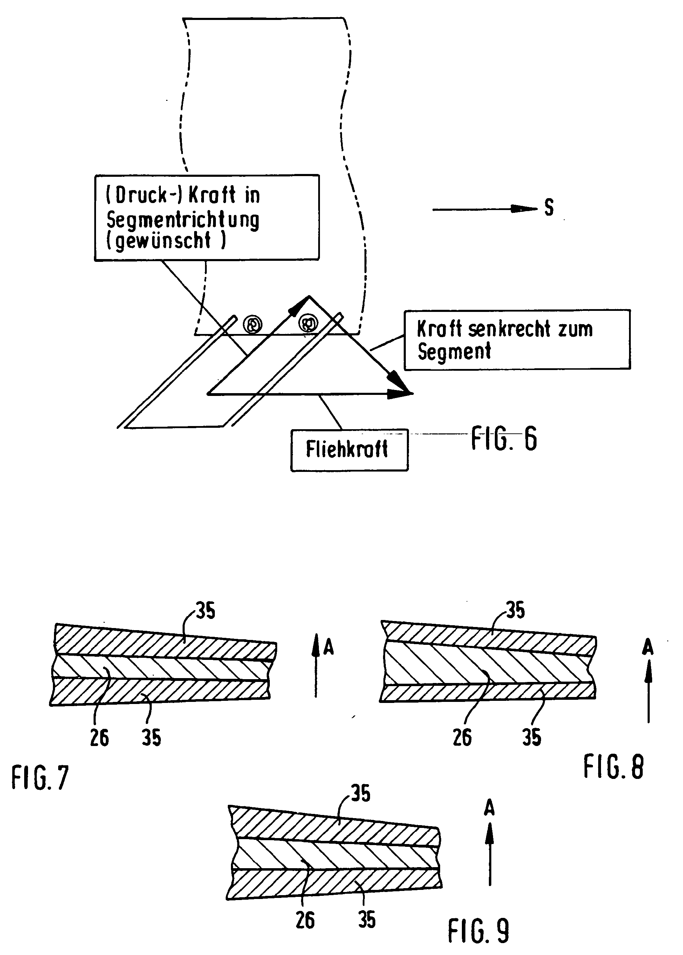

Entsprechend dem Ausführungsbeispiel in Fig. 6 sind die Einschnitte 34 schräg zur Spannweitenrichtung (S) ausgerichtet. Die schräge Ausbildung hat den Vorteil, dass unter Ausnutzung des unterbrochenen, spannweitigen Kraftfluss im Bereich der Einschnitte die Lasten bzw. Spannungen durch Fliehkraft, Schlagen, Schwenken usw. sich derart vorteilhaft überlagern, dass im Piezoelement keine unerwünschten Spannungszustände, insbesondere Zug, wirken bzw. unerwünschten Spannungszustände reduziert werden. Die Aktuatorelemente können dadurch zusätzlich auf Druck vorgespannt werden. Weiterhin reduzieren sich die ungünstigen, spannweitige Biegelasten im Aktuator und die Knickgefahr durch Fliehkraft.

In Fig. 7 bis 9 ist schematisch die Ausgestaltung des reversibel verbiegbaren Trägerelements 26 sowie der mit dem Trägerelement in Wirkverbindung stehenden Aktuatoren in größerer Einzelheit in verschiedenen Ausführungsformen gezeigt. Das Trägerelement 26 besteht aus Faserverbundwerkstoffmaterial bzw. Compositmaterial, (z.B. aus glasfaserverstärktem Kunststoff). Die mit dem Trägermaterial 26 in Wirkverbindung stehenden Aktuatoren 35 sind direkt auf die Oberfläche des Trägermaterials 26 aufgebracht. Als Aktuatoren 35 kommen Elemente in Betracht, die bei Aktivierung bzw. Betätigung, z. B. durch Anlegen einer elektrischen Spannung oder auch anderweitig, z.B. magnetostriktiv, ihre Gestalt definiert ändern. Beispielsweise kann der Aktuator 35 Piezokeramiken, beispielsweise d33 oder d31 Piezostapel (Piezostacks), oder Piezopolymere enthalten, welche bei Spannungsbeaufschlagung zumindest in einer Raumrichtung definiert, d.h. abhängig von der Größe des Aktivierungsparameters vorhersagbar, expandieren oder sich zusammenziehen. Die Aktuatoren 35 sind im Wesentlichen streifen- oder plattenförmig und insbesondere in einer Raumrichtung (der in Fig. 7 bis 9 dargestellten Querschnittsrichtung) dünn im Vergleich zu der lokalen Profildicke im Profilhinterkantenbereich.

Bei der in Fig. 7 dargestellten Ansicht ist zusätzlich zur Optimierung und Anpassung an die Biegeverteilung bzw. die aerodynamische Effektivität der Rotorblatt-Klappe 24 die Schichtdicke (Stapeldicke) des piezoelektrischen Elements 35, das beidseitig auf eine Trägerelement 26 aus Faserverbundwerkstoff (z.B. glasfaserverstärktem Kunststoff) aufgebracht ist, angepasst. Insbesondere ist das Trägerelement 26 mit konstanter Dicke gestaltet, während die piezoelektrischen Elemente 35 linear abnehmende Dicken in Profiltiefenrichtung aufweisen. Das piezoelektrische Element kann auch z. B. ein gestaltangepasster Piezostapel (sog. Piezostack) sein, der durch spanende Formgebung bearbeitet ist.

In Fig. 8 ist der umgekehrte Fall gezeigt, bei welchem die Piezoelemente 35 eine konstante Dicke aufweisen, während das Trägerelement 26 aus glasfaserverstärktem Kunststoff eine variierende Dicke hat.

Fig. 9 zeigt schließlich eine Kombination, bei welcher sowohl die piezoelektrischen Elementen 35 als auch das Trägerelement 26 aus glasfaserverstärktem Kunststoff in ihren Dicken variabel sind.

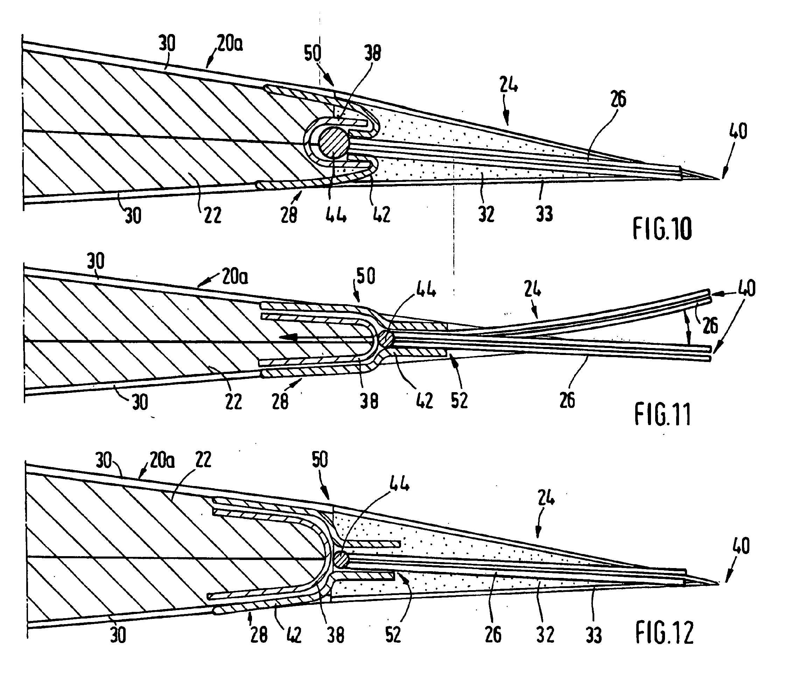

In Fig. 10 bis 18 sind verschiedene Möglichkeiten gezeigt, um Schnittstellen, d. h. wiederholt lösbare und ohne wesentliche Neu-Justierung wiederherstellbare Verbindungen, zwischen dem Profilkern 22 bzw. dem Profil-Grundkörper 20a und der Rotorblatt-Klappe 24 zu realisieren. Wesentlich dabei ist, dass über die Schnittstellen Kräfte zwischen der oberen und der unteren Deckhaut 30 übertragen werden können, d. h. dass der Torsionskasten des vorderen Profilbereichs geschlossen ist. Es ist erforderlich, dass eine scher- und biegesteife Schnittstelle vorgesehen wird, um die Kräfte der Klappe auf den vorderen Profil-Grundkörper 20a, der als Torsionskasten ausgebildet ist, zu übertragen.

Besonders bevorzugt ist es, wenn die Schnittstelle so gestaltet ist, dass die Rotorblattklappe 24 vollständig vom Profil-Grundkörper 20a trennbar ist. Dazu kann die mechanische Schnittstelle einen formschlüssigen oder kraftschlüssigen Übergang zwischen den trennbaren Bauteilen oder eine Kombination aus beiden bilden, beispielsweise durch Schrauben, Bolzen, Nieten oder durch die Verwendung von Nut - und Federprofilen.

Beispiele zur Erhöhung der Steifigkeit und für die Lage einer z.B. elektrischen Schnittstelle sind in den genannten Figuren ebenfalls gezeigt. Beispielsweise zeigt Fig. 10 eine Anordnung, bei welcher zwischen dem Trägerelement 26 und der flexiblen Schutzhaut 33 im Bereich der Rotorblatt-Klappe 24 ein biegeelastisches erstes Füllmaterial 32 eingebracht ist. In den Profilkern 22 ist, zumindest bereichsweise, ein erstes U-förmiges Profil 38 eingebettet, das zur Profil-Hinterkante 40 offen ist. Eine durch Profilelemente 42 gebildete Aufnahmestruktur für das Trägerelement 26 besteht aus einem doppelt U-förmigen Kanal, wobei die U's der Aufnahmestruktur derart angeordnet sind, dass jedes U einen Schenkel des ersten U-förmigen Profils 38 umgreift. Das Trägerelement 26 ist zwischen die U-förmigen Profile 38 der Aufnahmestruktur eingeführt und weist dort in diesem Bereich auch eine elektrische Schnittstelle 44 mit gegenseitigen Anschlüssen auf. Das Gegenstück zur elektrischen Schnittstelle mit anschließender Verdrahtung über den Profilkern 22 kann im bzw. am Profil 38 vorgesehen sein. Die U-förmigen Profile 38, 42 der Aufnahmestruktur sind dabei vorzugsweise derart bemessen, dass ihre zu der oberen bzw. der unteren "starren" Deckhaut 30 des Profil-Grundkörpers gerichteten Schenkel nahe an die Deckhaut 30 gelangen, was die Übertragung von Scherkräften zwischen oberer und unterer Deckhaut 30 verbessert. Darüber hinaus ist die Anordnung vorzugsweise derart gewählt, dass sowohl ein Teil des U-förmigen Profils 38 als auch ein Teil der Profile 42 der Aufnahmestruktur im Profilkern 22 eingebettet ist, während ein anderer Teil jeweils in das Füllmaterial 32 reicht. Somit kann, auch wenn die Struktur als Rotorblatt 20 gestaltet ist, dessen Rotorblatt-Klappe 24 vom Profilkern 22 trennbar ist, gewährleistet werden, dass die mechanische und elektrische Schnittstelle derart definiert sind, dass auch bei wiederholtem Auseinander- und Zusammenbau keinerlei Verschiebungen der Bauteile zueinander auftreten und somit die Verbindung leicht wiederherstellbar ist.

Eine Alternative für den Befestigungsbereich 50 ist in Fig. 11 für einen Fall gezeigt, in dem das Trägerelement 26 ohne umgebendes erstes Füllmaterial 32 die Rotorblatt-Klappe 24 bildet. Das Trägerelement 26 ist in Fig. 11 in zwei Auslenkungspositionen dargestellt. Anders als bei der in Fig. 10 gezeigten Ausführungsform ist das Profil 38 derart in den Profilkern 22 bzw. an den Hinterkantenbereich des Profil-Grundkörpers 20a eingebracht, dass es zur Profil-Hinterkante 40 gewölbt ist. Die durch die Profile 42 gebildete Aufnahmestruktur, die ebenfalls im Wesentlichen eine U-förmige Kanalform hat, umfasst außenseitig das U des Profils 38 mit gleicher Wölbungsrichtung. Elektrische Kontaktierungsmittel und Anschlüsse als elektrische Schnittstelle 44 können wiederum an sowohl der Aufnahmestruktur als auch dem Profil 38 vorgesehen sein, so dass bei einem Trennen der durch das Profil 42 gebildeten Aufnahmestruktur vom Profil 38 und anschließendem erneuten Zusammenbau die Schnittstelle definiert ist. Als mechanische Verstärkung für die Schnittstelle können zusätzliche formschlüssige oder kraftschlüssige Elemente vorgesehen werden. Das Profilelement 42 enthält weiter zur Hinterkante 40 des Rotorblattsprofils gerichtet eine kanalförmige Einstecköffnung 52, durch die das Trägerelement 26 geführt wird, und in die es eingesetzt ist. In diesem Fall ist die Befestigungseinrichtung 28 vollständig in den Profilkern 22 bzw. das hintere Ende des Profil-Grundkörpers 20a eingebettet. Nur das Trägerelement 26 mit seinen hier nicht dargestellten Aktuatoren reicht als Rotorblatt-Klappe 24 mit einem Ende aus dem Profil-Grundkörper 20a zur Hinterkante 40 hin hinaus.

In Fig. 12 ist die zur Fig. 11 entsprechende Anordnung für den Fall gezeigt, dass die gesamte Länge des aus dem Profil-Grundkörper 20a herausragenden Teils des Trägerelements 26 in ein elastisches erstes Füllmaterial 32 eingebettet ist. Die Außenkontur des ersten Füllmaterials 32 bildet die Außenkontur der Rotorblatt-Klappe 24 und die Außenkontur des Rotorblattprofils in diesem Bereich. Die Befestigungsstruktur am Profil-Grundkörper, einschließlich der elektrischen und mechanischen Schnittstelle ist gleich wie bei Fig. 11.

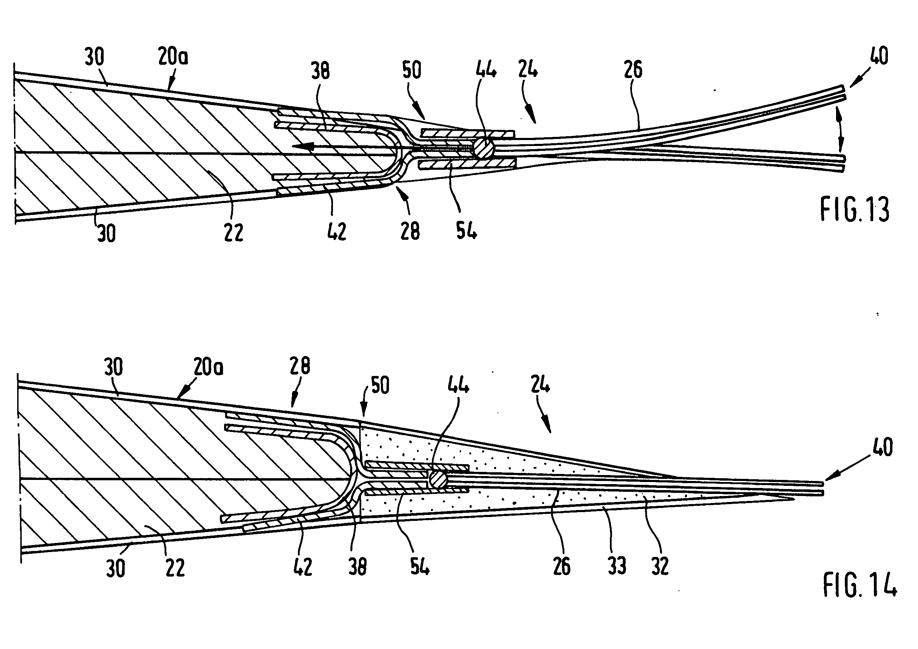

Die Befestigungsstrukturen gemäß Fig. 13 und 14 unterscheiden sich von den Befestigungsstrukturen der Fig. 11 und 12 dadurch, dass das Trägerelement 26 nicht in eine kanalförmige Einstecköffnung 52 für das Trägerelement 26 eingesetzt ist, sondern ein gegabeltes Ende besitzt, das einen Befestigungsvorsprung 54 außenseitig umgreift. Durch den Befestigungsvorsprung 54 ist lediglich elektrisches Verdrahtungsmaterial für die elektrische Schnittstelle 44 geführt. Wie bei Fig. 12 ist auch bei der Variante nach Fig. 14 das Trägerelement von dem ersten Füllmaterial 32 bedeckt, welches auch über die Befestigungseinrichtung 50 bzw. deren Befestigungsvorsprung 54 und die Schnittstelle 44 reicht.

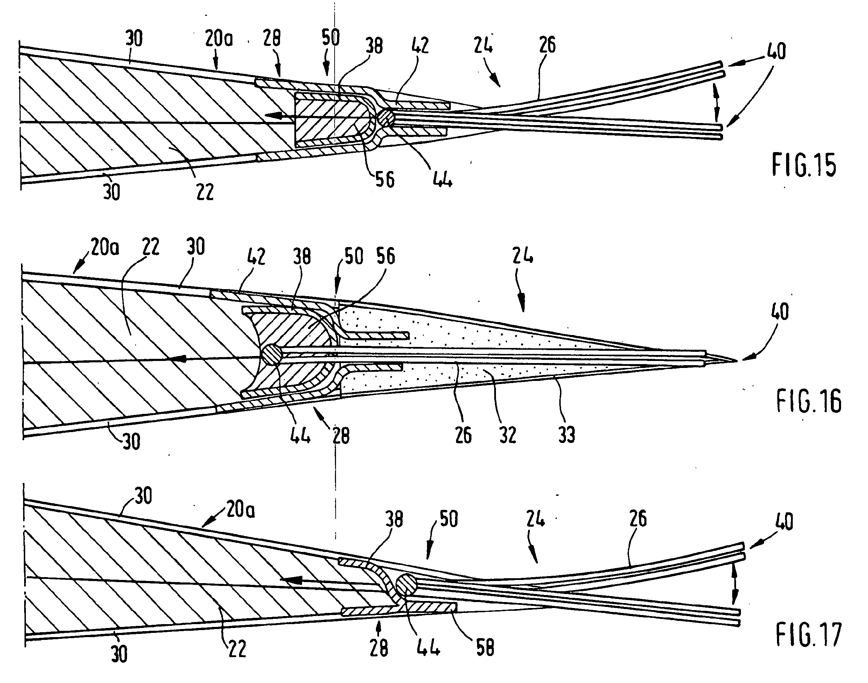

Die Befestigungsstruktur gemäß Fig. 15 und 16 entspricht im Wesentlichen der Befestigungsstruktur gemäß Fig. 11 und 12. Zur Erhöhung der Steifigkeit ist das U-förmige Profil 38 jedoch mit einem zweiten Füllmaterial 56 ausgefüllt, welches eine höhere Steifigkeit als das Material des Profilkerns 22 besitzt. Bei der Ausführungsform nach Fig. 16 besitzt das zweite Füllmaterial 56 eine sich in Richtung Hinterkante einwölbende Einbuchtungen, so dass ein allmählicher Übergang vom zweiten Füllmaterial 56 zum Profilkern 22 und der oberen und unteren Deckhaut 30 erzielt wird.

Das Trägerelement 26 kann seinerseits jeweils durch Form- und/oder Kraftschluss an der durch die Profile 42 gebildeten Aufnahmestruktur befestigt sein.

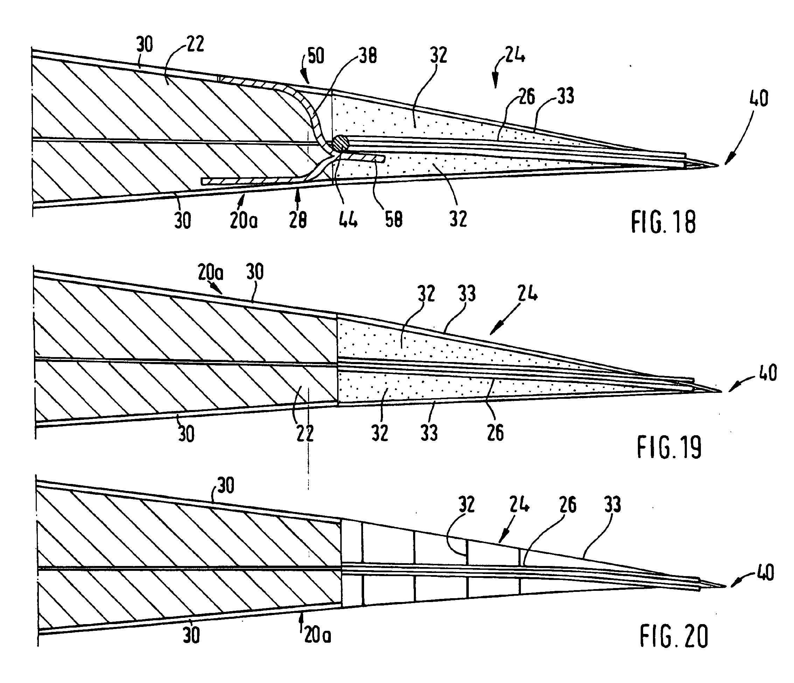

Fig. 17 und 18 zeigen weitere Ausführungsformen für den Befestigungsbereich 50. Während bei den Befestigungsstrukturen gemäß Fig. 10 bis 14 jeweils im Wesentlichen symmetrische Profilelemente 38, 42 für im Wesentlichen symmetrische Rotorblattprofile und/oder symmetrische Klappenprofile und Klappenausschläge verwendet wurden, deren Schenkel 42 jeweils an die Deckhaut 30 im Bereich des Profilkerns 22 reichen, wird bei den Befestigungsstrukturen gemäß Fig. 17 und 18 nur ein durch ein Profil 38 gebildeter asymmetrischer Kanal verwendet, der einen asymmetrisch angebrachten Befestigungsvorsprung 58 aufweist. Einseitig an diesem Vorsprung 58 ist das Trägerelement 26 form- und/oder kraftschlüssig befestigt. Diese Ausgestaltungsweise eignet sich insbesondere für asymmetrische Rotorblattprofile und/oder asymmetrische Klappenprofile und Klappenausschläge. Auch diese Schnittstellenstruktur kann Scherkräfte zwischen der oberen und unteren Deckhaut 30 übertragen und eine steife Biegeschnittstelle sicherstellen. Die Befestigung des Trägerelements 26 an dem Vorsprung 58 kann beispielsweise durch Kleben, Nieten, Löten, Schrauben oder ähnliches erfolgen.

Bei Ausführungsformen, bei denen das Trägerelement 26 in ein elastisches erstes Füllmaterial 32 eingebettet bzw. von diesem überzogen ist, kann das erste Füllmaterial 32, wie in Fig. 19 gezeigt, als homogenes erstes Füllmaterial 32 ausgestaltet sein, beispielsweise als ein Schaum oder ein Elastomerwerkstoff oder z. B. Silikon. Das erste Füllmaterial 32 füllt den Bereich zwischen der Ober- und Unterseite des Trägerelements 26 und einer biegeelastischen bzw. flexiblen äußeren Schutzschicht 33 aus, die an dieser Stelle die Außenkontur der Klappe und des Rotorblattprofils bildet. Das erste Füllmaterial 32 und die Schutzschicht 33 folgen der reversiblen Verbiegung des Trägerelements 26, woraus ein bogenförmiger, stetiger Rotorblatt-Klappenausschlag resultiert.

Alternativ dazu kann für das erste Füllmaterial 32 auch inhomogenes Material oder eine Struktur verwendet werden, wie sie in Fig. 20 gezeigt ist. Bei dieser Struktur handelt es sich beispielsweise um eine Art Tragwerk, z. B. aus sich in Profildickenrichtung erstreckenden rippenartigen Versteifungselementen, das ebenfalls die ausreichende Elastizität und Flexibilität aufweist, um der Bewegung des Trägerelements 26 zu folgen. Dabei kann für das erste Füllmaterial 32 ebenso wie für die Schutzhaut 33 eine etwaige Richtungsabhängigkeit des Füllmaterials bzw. der Schutzhaut ausgenutzt werden.

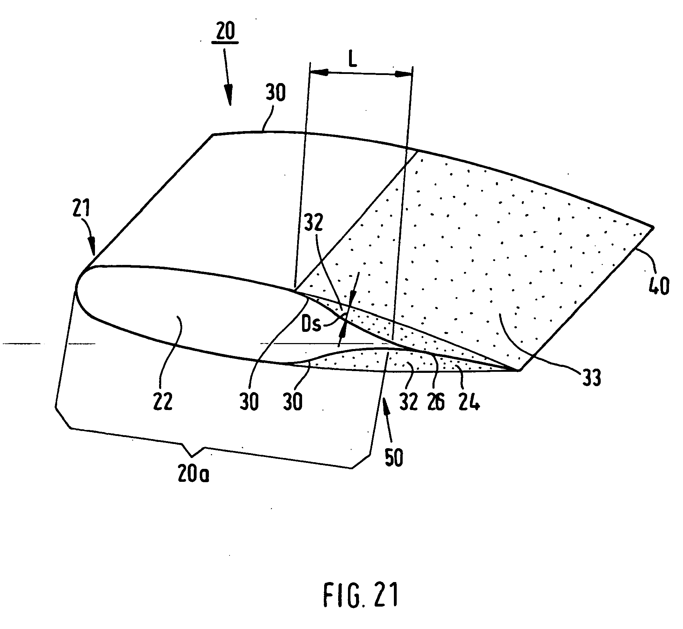

In den vorher erörterten Ausführungsformen ist der Übergang zwischen Rotorblatt-Klappe 24 und Profilkern 22 bzw. Profil-Grundkörper 20a und dem ersten Füllmaterial 32 stets als relativ abrupter, geradliniger Übergang dargestellt worden. Selbstverständlich kann der Übergang jedoch auch allmählich erfolgen. Wie in Fig. 21 gezeigt, ist es z.B. möglich, dass sich der Profil-Grundkörper 20a mit dem Befestigungsbereich 50 zur Hinterkante 40 hin verjüngt. Und das auf der Ober- und Unterseite des Trägerelements 26 vorgesehene erste Füllmaterial 32 erstreckt sich bei dieser Ausführungsform über den Befestigungsbereich 50 hinweg bis auf den Profil-Grundkörper 20a bzw. dessen obere und untere Deckhaut 30. Die in Profiltiefenrichtung gemessene Übergangslänge L, in der sich das erste Füllmaterial 32 über den Profil-Grundkörper 20a erstreckt, kann in Abhängigkeit des vorbestimmten Rotorblattprofils sowie der geforderten profilgeometrischen Eigenschaften der Rotorblatt-Klappe 24 im Neutralzustand und im ausgelenkten Zustand festgelegt werden. Aus der Fig. 21 geht des weiteren hervor, dass die lokale Schichtdicke Dₛ des ersten Füllmaterials 32 ausgehend von der Hinterkante 40 zum Befestigungsbereich 50 zunächst zunimmt und dann anschließend in Richtung zum Profil-Nasenbereich 21 hin wieder abnimmt.

Die Erfindung ist nicht auf die obigen Ausführungsbeispiele beschränkt. Im Rahmen des Schutzumfangs kann das erfindungsgemäße Rotorblatt vielmehr auch andere als die oben konkret beschriebenen Ausgestaltungsformen annehmen. So ist es z. B. möglich, dass der das Trägerelement 26 und die Rotorblatt-Klappe 24 enthaltende Teil des Rotorblattprofils, einschließlich desjenigen Teils des Profil-Grundkörpers 20a, der den Befestigungsbereich 50 aufweist, auch als ein separates Klappenmodul ausgestaltet ist, welches an dem verbleibenden Teil des Profil-Grundkörpers 20a lösbar zu befestigen ist.

### Bezugszeichenliste

- 20: Rotorblatt
- 20a: Profil-Grundkörper
- 21: Profil-Nasenbereich
- 22: Profilkern
- 23: Hinterkantenbereich
- 24: Rotorblatt-Klappe
- 26: Reversibel verbiegbares Trägerelement
- 28: Befestigungseinrichtung
- 30: Deckhaut
- 32: Biegeelastisches Füllmaterial
- 33: Biegeelastische Schutzhaut
- 34: Einschnitte
- 35: Aktuator
- 38: U-förmiges Profil
- 40: Profilhinterkante
- 42: Profilelement
- 44: Elektrische Schnittstelle und/oder Anschlüsse
- 50: Befestigungsbereich
- 52: Einstecköffnung
- 54: Befestigungsvorsprung
- 56: Füllmaterial
- 58: Befestigungsvorsprung

- Dₛ: Lokale Schichtdicke des ersten Füllmaterials 32
- L: Übergangslänge
- S: Spannweitenrichtung
- A: Auftriebsrichtung

## Patentansprüche

1. Rotorblatt (20), insbesondere für ein Drehflügelflugzeug, umfassend ein aerodynamisch wirksames Rotorblattprofil mit einem Profil-Nasenbereich (21), einen Profil-Grundkörper (20a) mit einem Profilkern und einer den Profilkern (22) umhüllenden oberen und unteren Deckhaut (30), sowie einem Profil-Hinterkantenbereich (23) mit einer Hinterkante (40) und Aktuatoren (35), **dadurch gekennzeichnet, dass** ein reversibel verbiegbares Trägerelement (26) mit einem ersten Ende an einem zur Hinterkante (40) hinweisenden Endbereich des Profil-Grundkörpers (20a) eingebettet und befestigbar ist und mit einem zweiten Ende aus dem Profil-Grundkörper (20a) und dessen Endbereich zur Hinterkante (40) hin hinausragt und eine bewegliche Rotorblatt-Klappe (24) bildet, und die Aktuatoren (35) mit dem herausragenden zweiten Ende des reversibel verbiegbaren Trägerelements (26) in Wirkverbindung stehen über deren Längenänderung ein bogenförmiger Klappenausschlag initiierbar ist, wobei das die Rotorblatt-Klappe (24) bildende zweite Ende des reversibel verbiegbaren Trägerelements (26) in Spannweitenrichtung (S) betrachtet durch Einschnitte (34) in mehrere Segmente eingeteilt ist, denen jeweils mindestens ein auf einer Oberfläche des Trägerelements (26) aufgebrachter Aktuator (35) zugewiesen ist.

2. Rotorblatt nach Patentanspruch 1, **dadurch gekennzeichnet, dass** die Einschnitte (34) senkrecht zur Spannweitenrichtung (S) angeordnet sind.

3. Rotorblatt nach Patentanspruch 1, **dadurch gekennzeichnet, dass** die Einschnitte (34) schräg zur Spannweitenrichtung (S) angeordnet sind.

4. Rotorblatt nach einem der vorhergehenden Patentansprüche, **dadurch gekennzeichnet, dass** die Aktuatoren (35) direkt auf das reversibel verbiegbare Trägerelement (26) aufgebracht sind.

5. Rotorblatt nach einem der vorhergehenden Patentansprüche, **dadurch gekennzeichnet, dass** die Aktuatoren (35) als Piezoaktuatoren ausgebildet sind.

6. Rotorblatt nach Patentanspruch 5, **dadurch gekennzeichnet, dass** die Piezoaktuatoren (35) und/oder das reversibel verbiegbare Trägerelement (26) eine variierende Dicke aufweisen.

7. Rotorblatt nach einem der vorhergehenden Patentansprüche, **dadurch gekennzeichnet, dass** das reversibel verbiegbare Trägerelement (26) aus einem Faserverbundwerkstoffmaterial, insbesondere aus einem glasfaserverstärkten Kunststoffmaterial, hergestellt ist.

8. Rotorblatt nach einem der vorhergehenden Patentansprüche, **dadurch gekennzeichnet, dass** in Auftriebsrichtung (A) betrachtet auf beiden Seiten der Segmente ein Aktuator (35) angeordnet ist.

9. Rotorblatt nach einem der Patentansprüche 1 bis 7, **dadurch gekennzeichnet, dass** in Auftriebsrichtung (A) betrachtet nur auf einer Seite der Segmente ein Aktuator (35) angeordnet ist.

10. Rotorblatt nach einem der vorhergehenden Patentansprüche, **dadurch gekennzeichnet, dass** das Trägerelement (26) als eine Rückstelleinrichtung für die Aktuatoren (35) ausgebildet ist.

11. Rotorblatt nach einem der vorhergehenden Patentansprüche, **dadurch gekennzeichnet, dass** zumindest das zweite Ende des reversibel verbiegbaren Trägerelements (26), welches die bewegliche Rotorblatt-Klappe (24) bildet, mit einem flexiblen, biegeelastischen ersten Füllmaterial (32) überzogen ist, welches in diesem Bereich des Rotorblattprofils dessen Außenkontur bildet.

12. Rotorblatt nach Patentanspruch 11, **dadurch gekennzeichnet, dass** sich das flexible, biegeelastische erste Füllmaterial (32) bis auf den Profil-Grundkörper (20a) oder auf oder unter dessen Deckhaut (30) erstreckt.

13. Rotorblatt nach Patentanspruch 11 oder 12, **dadurch gekennzeichnet, dass** das flexible, biegeelastische Füllmaterial (32) ein homogenes, flexibles biegeelastisches Füllmaterial (32), insbesondere ein Elastomerwerkstoff ist, insbesondere ein Silikonwerkstoff, oder ein Schaummaterial.

14. Rotorblatt nach Patentanspruch 11 oder 12, **dadurch gekennzeichnet, dass** das flexible, biegeelastische Füllmaterial (32) ein inhomogenes, flexibles biegeelastisches Füllmaterial (32), insbesondere ein Material mit rippen- oder tragwerk- oder skelettartigen Versteifungselementen ist.

15. Rotorblatt nach einem der Patentansprüche 11 bis 14, **dadurch gekennzeichnet, dass** das flexible, biegeelastische erste Füllmaterial (32) eine flexible, biegeelastische Schutzhaut (33) aufweist, welche zumindest im Bereich der Rotorblatt-Klappe (24) die Außenkontur des Rotorblattprofils bildet.

16. Rotorblatt nach Patentanspruch 15, **dadurch gekennzeichnet, dass** die flexible, biegeelastische Schutzhaut (33) integraler Bestandteil des flexiblen, biegeelastischen ersten Füllmaterials (32) ist.

17. Rotorblatt nach Patentanspruch 15, **dadurch gekennzeichnet, dass** die flexible, biegeelastische Schutzhaut (33) eine auf das flexible, biegeelastische erste Füllmaterial (32) aufgebrachte separate Schutzschicht ist.

18. Rotorblatt nach einem der vorhergehenden Patentansprüche, **dadurch gekennzeichnet, dass** sich die obere und untere Deckhaut (30) bis auf das erste Ende des Trägerelements (26) erstreckt und das Trägerelement (26) hält, und das zweite Ende des Trägerelements (26) zwischen der oberen und unteren Deckhaut (30) frei herausragt.

19. Rotorblatt nach einem der vorhergehenden Patentansprüche, **dadurch gekennzeichnet, dass** sich die Deckhaut (30) bis auf das Trägerelement (26) erstreckt und in diesem Abschnitt eine gegenüber denjenigen Bereichen der Deckhaut (30), welche den Profil-Grundkörper (20a) mit seinem Profilkern (22) umhüllen, reduzierte Hautdicke besitzt, so dass die Deckhaut (30) in diesem Abschnitt zusammen mit dem Trägerelement (26) zu dem bogenförmigen Rotorblatt-Klappenausschlag verformbar ist.

20. Rotorblatt nach einem der vorhergehenden Patentansprüche, **dadurch gekennzeichnet, dass** sich die Deckhaut (30) bis auf das Trägerelement (26) erstreckt und im Bereich des ersten Endes des Trägerelements (26) eine lokale Unstetigkeitsstelle in seiner Biegesteifigkeit aufweist, welche ein virtuelles Rotorblatt-Klappengelenk bildet, über das das Trägerelement (26) zu einem Rotorblatt-Klappenausschlag verformbar ist.

21. Rotorblatt nach einem der vorhergehenden Patentansprüche, **dadurch gekennzeichnet, dass** an oder in demjenigen Endbereich des Profil-Grundkörpers (20a), der dem Trägerelement (26) zugeordnet ist, eine Befestigungsvorrichtung (28) vorgesehen ist, an welcher das Trägerelement (26), oder ein die Rotorblatt-Klappe (24) mit einem Trägerelement (26) aufweisenden Profil-Hinterkantenbereich (23) lösbar zu befestigen ist.

22. Drehflügelflugzeug, insbesondere Hubschrauber, mit wenigstens einem Rotor mit mindestens einem Rotorblatt (20) nach einem der vorhergehenden Ansprüche.

## Claims

1. Rotor blade (20), especially for a rotary wing aircraft, comprising an aerodynamically effective rotor blade profile with a profile nose region (21), a profile base body (20a) with a profile core and an upper and lower cover skin (30) that envelops the profile core (22), and a profile rear edge region (23) with a rear edge (40) and actuators (35), **characterised in that** a reversibly bendable supporting member (26) is embedded and attachable with a first end at an end region of the profile base body (20a) pointing towards the rear edge (40) and projects with a second end out of the profile base body (20a) and its end region towards the rear edge (40) and forms a movable rotor blade flap (24), and the actuators (35) are actively connected to the projecting second end of the reversibly bendable supporting member (26) and an arc-shaped flap deflection can be initiated via the change in length of the actuators, the second end of the reversibly bendable supporting member (26) that forms the rotor blade flap (24) viewed in the span direction (S) being divided by notches (34) into several segments to which in each case at least one actuator (35) applied to a surface of the supporting member (26) is assigned.

2. Rotor blade according to Claim 1, **characterised in that** the notches (34) are arranged perpendicular to the span direction (S).

3. Rotor blade according to Claim 1, **characterised in that** the notches (34) are arranged obliquely to the span direction (S).

4. Rotor blade according to one of the preceding claims, **characterised in that** the actuators (35) are applied directly to the reversibly bendable supporting member (26).

5. Rotor blade according to one of the preceding claims, **characterised in that** the actuators (35) are formed as piezoactuators.

6. Rotor blade according to Claim 5, **characterised in that** the piezoactuators (35) and/or the reversibly bendable supporting member (26) have a varying thickness.

7. Rotor blade according to one of the preceding claims, **characterised in that** the reversibly bendable supporting member (26) is made from a fibre composite material, especially from a glass fibre-reinforced plastic material.

8. Rotor blade according to one of the preceding claims, **characterised in that** an actuator (35) is arranged on both sides of the segments, viewed in the direction of lift (A).

9. Rotor blade according to one of Claims 1 to 7, **characterised in that** an actuator (35) is arranged only on one side of the segments, viewed in the direction of lift (A).

10. Rotor blade according to one of the preceding claims, **characterised in that** the supporting member (26) is formed as a resetting means for the actuators (35).

11. Rotor blade according to one of the preceding claims, **characterised in that** at least the second end of the reversibly bendable supporting member (26) that forms the movable rotor blade flap (24) is coated with a flexible, flexurally elastic first filler material (32) that in this region of the rotor blade profile forms its outside contour.

12. Rotor blade according to Claim 11, **characterised in that** the flexible, flexurally elastic first filler material (32) extends as far as the profile base body (20a) or on or under its cover skin (30).

13. Rotor blade according to Claim 11 or 12, **characterised in that** the flexible, flexurally elastic filler material (32) is a homogeneous flexible, flexurally elastic filler material (32), especially an elastomer material, especially a silicone material or a foam material.

14. Rotor blade according to Claim 11 or 12, **characterised in that** the flexible, flexurally elastic filler material (32) is a non-homogeneous flexible, flexurally elastic filler material (32), especially a material with rib-like or supporting framework-like or skeleton-like stiffening elements.

15. Rotor blade according to one of Claims 11 to 14, **characterised in that** the flexible, flexurally elastic first filler material (32) is a flexible, flexurally elastic protective skin (33) that forms the outside contour of the rotor blade profile at least in the region of the rotor blade flap (24).

16. Rotor blade according to Claim 15, **characterised in that** the flexible, flexurally elastic protective skin (33) is an integral component of the flexible, flexurally elastic first filler material (32).

17. Rotor blade according to Claim 15, **characterised in that** the flexible, flexurally elastic protective skin (33) is a separate protective layer that has been applied to the flexible, flexurally elastic first filler material (32).

18. Rotor blade according to one of the preceding claims, **characterised in that** the upper and lower cover skin (30) extends as far as the first end of the supporting member (26) and holds the supporting member (26), and the second end of the supporting member (26) projects freely between the upper and lower cover skin (30).

19. Rotor blade according to one of the preceding claims, **characterised in that** the cover skin (30) extends as far as the supporting member (26) and in this section has a skin thickness that has been reduced relative to those regions of the cover skin (30) that envelop the profile base body (20a) with its profile core (22), so that the cover skin (30) in this section can be deformed together with the supporting member (26) into the arc-shaped rotor blade flap deflection.

20. Rotor blade according to one of the preceding claims, **characterised in that** the cover skin (30) extends as far as the supporting member (26) and in the region of the first end of the supporting member (26) has a local point of discontinuity in its flexural stiffness that forms a virtual rotor blade flap joint via which the supporting member (26) can be deformed into a rotor blade flap deflection.

21. Rotor blade according to one of the preceding claims, **characterised in that** on or **in that** end region of the profile base body (20a) that is assigned to the supporting member (26), there is provided a fastening device (28) to which the supporting member (26) or a rear edge region (23) of the profile that has the rotor blade flap (24) with a supporting member (26) can be detachably fastened.

22. Rotary wing aircraft, especially helicopter, with at least one rotor with at least one rotor blade (20) according to one of the preceding claims.

## Revendications

1. Pale de rotor (20), en particulier pour un giravion, comprenant un profil de pale à effet aérodynamique avec une zone de nez du profil (21), un corps de base du profil (20a) comportant un noyau du profil (22) et une enveloppe (30) recouvrant ce noyau sur le côté supérieur et inférieur, ainsi qu'une zone de bord de fuite du profil (23) avec un bord de fuite (40) et des actionneurs (35), **caractérisée en ce que** un élément de support (26) à déformation réversible est inséré et peut être fixé par une première extrémité dans une zone terminale du corps de base du profil (20a) orientée vers le bord de fuite (40) et que sa deuxième extrémité dépasse du corps de base du profil (20a) et de sa zone terminale dans la direction du bord de fuite (40) et forme un volet de pale de rotor (24) mobile, et que les actionneurs (35) sont en liaison active avec la deuxième extrémité en saillie de l'élément de support (26) à déformation réversible, une modification de sa longueur pouvant déclencher une cambrure du volet, la deuxième extrémité de l'élément de support (26) à déformation réversible formant le volet de pale de rotor (24) étant divisée en plusieurs segments dans le sens de l'envergure (S) au moyen d'encoches (34), chaque segment étant affecté d'au moins un actionneur (35) monté sur une surface de l'élément de support (26).

2. Pale de rotor selon la revendication 1, **caractérisée en ce que** les encoches (34) sont disposées à la perpendiculaire du sens de l'envergure (S).

3. Pale de rotor selon la revendication 1, **caractérisée en ce que** les encoches (34) sont disposées en oblique par rapport au sens de l'envergure (S).

4. Pale de rotor selon l'une des revendications précédentes, **caractérisée en ce que** les actionneurs (35) sont montés directement sur l'élément de support (26) à déformation réversible.

5. Pale de rotor selon l'une des revendications précédentes, **caractérisée en ce que** les actionneurs (35) sont des piézoactionneurs.

6. Pale de rotor selon la revendication 5, **caractérisée en ce que** les piézoactionneurs (35) et/ou l'élément de support (26) à déformation réversible présentent une épaisseur variable.

7. Pale de rotor selon l'une des revendications précédentes, **caractérisée en ce que** l'élément de support (26) à déformation réversible est fabriqué dans un matériau composite renforcé par des fibres, en particulier une matière plastique renforcée de fibres de verre.

8. Pale de rotor selon l'une des revendications précédentes, **caractérisée en ce que** un actionneur (35) est placé des deux côtés des segments, dans le sens de la portance (A).

9. Pale de rotor selon l'une des revendications 1 à 7, **caractérisée en ce que** un actionneur (35) est placé d'un seul côté des segments, dans le sens de la portance (A).

10. Pale de rotor selon l'une des revendications précédentes, **caractérisée en ce que** l'élément de support (26) forme un dispositif de rappel pour les actionneurs (35).

11. Pale de rotor selon l'une des revendications précédentes, **caractérisée en ce que** au moins la deuxième extrémité de l'élément de support (26) à déformation réversible, qui forme le volet de pale de rotor (24) mobile, est recouverte d'une première matière de remplissage (32) flexible, à déformation élastique, qui dessine le contour extérieur dans cette zone du profil de la pale de rotor.

12. Pale de rotor selon la revendication 11, **caractérisée en ce que** la première matière de remplissage (32) flexible, à déformation élastique se prolonge jusque sur le corps de base du profil (20a) ou bien sur ou sous son enveloppe (30).

13. Pale de rotor selon la revendication 11 ou 12, **caractérisée en ce que** la matière de remplissage (32) flexible, à déformation élastique est une matière de remplissage (32) homogène, flexible, à déformation élastique, en particulier un élastomère, en particulier un élastomère silicone ou alvéolaire.

14. Pale de rotor selon la revendication 11 ou 12, **caractérisée en ce que** la matière de remplissage (32) flexible, à déformation élastique est une matière de remplissage (32) non homogène, flexible, à déformation élastique, en particulier une matière avec des éléments raidisseurs tels que nervure, voilure, ossature.

15. Pale de rotor selon l'une des revendications 11 à 14, **caractérisée en ce que** la première matière de remplissage (32) flexible, à déformation élastique présente une enveloppe protectrice (33) flexible, à déformation élastique qui forme, au moins dans la zone du volet de pale de rotor (24), le contour extérieur du profil de la pale de rotor.

16. Pale de rotor selon la revendication 15, **caractérisée en ce que** l'enveloppe protectrice (33) flexible, à déformation élastique est une partie constitutive intégrale de la première matière de remplissage (32) flexible, à déformation élastique.

17. Pale de rotor selon la revendication 15, **caractérisée en ce que** l'enveloppe protectrice (33) flexible, à déformation élastique est une couche protectrice séparée déposée sur la première matière de remplissage (32) flexible, à déformation élastique.

18. Pale de rotor selon l'une des revendications précédentes, **caractérisée en ce que** l'enveloppe supérieure et inférieure (30) se prolonge jusque sur la première extrémité de l'élément de support (26) et maintient l'élément de support (26), et que la deuxième extrémité de élément de support (26) est en saillie libre entre l'enveloppe supérieure et inférieure (30).

19. Pale de rotor selon l'une des revendications précédentes, **caractérisée en ce que** l'enveloppe (30) se prolonge jusque sur l'élément de support (26) et présente dans cette portion une épaisseur de couche réduite par rapport aux zones de l'enveloppe (30) qui entourent le corps de base du profil (20a) et son noyau de profil (22), de sorte que, dans cette portion, l'enveloppe (30) peut être déformée en même temps que l'élément de support (26) pour former la cambrure du volet de la pale de rotor.

20. Pale de rotor selon l'une des revendications précédentes, **caractérisée en ce que** l'enveloppe (30) se prolonge jusque sur l'élément de support (26) et présente, dans la zone de la première extrémité de l'élément de support (26), une zone locale de discontinuité dans sa rigidité à la flexion, qui forme une articulation virtuelle de volet de pale de rotor par lequel l'élément de support (26) peut être déformé pour former une déflexion de volet de pale de rotor.

21. Pale de rotor selon l'une des revendications précédentes, **caractérisée en ce que** sur ou dans la zone terminale du corps de base de profil (20a) qui est affectée à l'élément de support (26), on a prévu un dispositif de fixation (28) permettant de fixer de manière amovible l'élément de support (26), ou bien une zone de bord de fuite du profil (23) comprenant le volet de pale de rotor (24) avec un élément de support (26).

22. Giravion, en particulier hélicoptère, équipé d'au moins un rotor avec au moins une pale de rotor (20) selon l'une des revendications précédentes.
